# EUROPÄISCHE PATENTSCHRIFT

(11) **EP 1 281 556 B1**
(45) Veröffentlichungstag und Bekanntmachung des Hinweises auf die Patenterteilung: **07.06.2006**
(21) Anmeldenummer: 02016168.3
(22) Anmeldetag: 20.07.2002
(51) Int. Cl.: B60J 7/22

(54) **Windabweiser für ein öffnungsfähiges Fahrzeugdach**
Wind deflector for an openable vehicle roof
Déflecteur de vent pour toit ouvrant de véhicule

(30) Priorität: 30.07.2001 DE 10136922
(43) Veröffentlichungstag der Anmeldung: 05.02.2003
(73) Patentinhaber: Webasto Vehicle Systems International GmbH, 82131 Stockdorf (DE)
(72) Erfinder: Würl, Robert, 82140 Olching (DE); Schreiter, Stephan, 82131 Gauting (DE)
(74) Vertreter: Wiese, Gerhard

(56) Entgegenhaltungen:
- EP-A- 0 744 311
- DE-A- 19 958 748
- DE-C- 19 603 670

## Beschreibung

Die vorliegende Erfindung betrifft einen Windabweiser für ein Fahrzeugdach mit einer mittels eines verstellbaren Deckels verschließbaren Dachöffnung, umfassend ein entlang des vorderen Randes der Dachöffnung angeordnetes Windabweiserelement, welches zwischen einer in die Dachkontur zurückgezogenen Außerbetriebsstellung und wenigstens einer ersten Betriebsstellung verstellbar ist, bei der zwischen dem Windabweiserelement und dem vorderen Rand der Dachöffnung ein Zwischenraum für eine Unterströmung des Windabweiserelementes besteht, gemäß dem Oberbegriff von Anspruch 1.

Windabweiser sind in ihrer einfachsten Ausgestaltung jeweils mit ihrer Vorderkante im Bereich des vorderen Randes der Dachöffnung schwenkbar angeordnete Windleitblätter, die beim Öffnen des Deckels hochgeschwenkt werden, so daß sich ihre Hinterkante oberhalb des Dachniveaus befindet. Sie haben die Aufgabe, die anströmende Luft nach oben abzulenken, womit zum einen eine direkte Anströmung der Fahrzeuginsassen verhindert und zum anderen eine Verminderung der Geräuschentwicklung durch die anströmende Luft bewirkt wird. Beide Funktionen sind vor allem bei höheren Fahrzeuggeschwindigkeiten von Bedeutung. Im Bereich niedrigerer Fahrgeschwindigkeiten, beispielsweise im Stadtverkehr, wäre es jedoch im allgemeinen erwünscht, Außenluft über die Dachöffnung in den Fahrzeuginnenraum zu lenken. Es sind deshalb auch schon Windabweiser bekannt geworden, bei denen das Windabweiserelement in eine Betriebsstellung verstellbar ist, bei der zwischen diesem und dem vorderen Rand der Dachöffnung ein Zwischenraum für eine Unterströmung des Windabweiserelementes besteht, so daß ein Teil der auf den Windabweiser auftreffenden Luft nach unten um diesen herum gelenkt wird.

Ein derartiger Windabweiser ist beispielsweise durch die DE 199 58 748 A1 bekannt. Bei diesem ist an der Vorderkante des Windabweiserelements ein Dichtelement angeordnet, dass in einer ersten Betriebsstellung dichtend an vorderen Rand der Dachöffnung anliegt und dadurch eine Unterströmung verhindert. In einer zweiten Betriebsstellung wird das Windabweiserelement weiter über das feste Fahrzeugdach angehoben, wobei das Dichtelement einen Strömungskanal für eine Unterströmung des Windabweiserelements freigibt. Nachteilig bei dieser bekannten Anordnung ist, daß das Dichtelement in der zweiten Betriebsstellung außer Kontakt mit dem festen Fahrzeugdach gerät und dadurch selbst durch Schwingungen Windgeräusche verursachen kann.

Es hat sich gezeigt, daß eine derartige Anordnung das bekannte Problem des Wummerns, d.h. der Bildung einer stehenden Luftschwingung im Fahrgastraum fördert. Es ist bereits grundsätzlich bekannt, dieses Problem dadurch zu entschärfen oder zu beseitigen, daß man die das Windabweiserelement umströmende Luft durch am Windabweiserelement ausgebildete Turbulenzerzeuger turbulent macht. Dies geschieht beispielsweise dadurch, daß das Windabweiserelement an seiner Oberkante burgzinnenartig ausgebildet, d.h. mit sich abwechselnden Zinnen und Scharten ausgestaltet ist. Eine solche Ausgestaltung entschärft oder beseitigt zwar das Problem des Wummerns bei mittleren Fahrgeschwindigkeiten. Ein Nachteil ist jedoch, daß diese burgzinnenartige Ausgestaltung des Windabweiserelementes bei hohen Fahrgeschwindigkeiten zu einem erhöhten Geräuschpegel im Fahrzeuginneren führt, der von den Fahrzeuginsassen als äußerst störend empfunden wird und meist dazu führt, daß das Schiebedach bei höheren Geschwindigkeiten geschlossen werden muß, um das Fahrtwindgeräusch zu beseitigen.

Durch die DE 198 02 440 A1 ist bereits ein Windabweiser mit einem burgzinnenartigen oberen Rand bekannt, bei welchem eine Abdeckeinrichtung vorgesehen ist, mit der die Scharten teilweise oder ganz verschlossen werden können, so daß die bei hohen Fahrgeschwindigkeiten nicht mehr erforderliche Turbulenzerzeugung und damit die als störend empfundene Geräuschentwicklung unterbunden wird. Ein Nachteil dieser Anordnung ist neben dem hohen baulichen Aufwand für die verstellbare Abdeckung, daß der Windabweiser eine verhältnismäßig große Bauhöhe hat, da die Höhe der Zinnen zu der für die Windabweisfunktion erforderlichen Höhe des Windabweisers hinzukommt, so daß sich insgesamt eine größere Bauhöhe ergibt, womit sich Probleme mit dem zur Verfügung stehenden Einbauraum für den Windabweiser ergeben können.

Bei einer anderen, aus der gattungsgemäßen EP 0 744 311 A1 bekannten Anordnung ist im Bereich der Unterströmung eines festen Windabweisers ein luftdurchlässiges Netz angeordnet, das sich über die gesamte Breite erstreckt und den Nachteil einer raschen, starken Verschmutzung durch Insekten, insbesondere in der warmen Jahreszeit aufweist.

Es ist die Aufgabe der vorliegenden Erfindung, einen Windabweiser der eingangs genannten Art zu schaffen, welcher bei einfachem Aufbau und einer geringen Einbauhöhe eine zufriedenstellende Lösung des Problems des Wummerns ermöglicht.

Diese Aufgabe ist erfindungsgemäß durch die Merkmale des Patentanspruchs 1 gelöst. Bevorzugte Ausgestaltungen der Erfindung sind den Unteransprüchen zu entnehmen. Dadurch, daß die Mittel zur Turbulenzerzeugung mit ihrem oberen Ende am Windabweiserelement und mit ihrem unteren Ende im Bereich des vorderen Randes der Dachöffnung an einem am festen Fahrzeugdach angeordneten Teil befestigt sind oder sich dort zumindest in stetiger Anlage befinden, sind deren Enden in allen Betriebspositionen in Kontakt mit festen Fahrzeugteilen, sodass deren Eigenschwingungen wirkungsvoll unterbunden werden. Dadurch, dass die Mittel zur Turbulenzerzeugung in der Unterströmung des Windabweiserelementes sich bei der ersten Betriebsstellung des Windabweiserelementes in die Unterströmung hinein erstrecken, und bei der Verstellung des Windabweiserelementes in die Außerbetriebsstellung unter demselben ablegbar sind, ergibt sich insgesamt eine einfache und kompakte Windabweiser-Anordnung. Die Ablage der Mittel zur Turbulenzerzeugung erfolgt bevorzugt so, daß diese zusammenfaltbar sind.

Diese Turbulenzerzeugungsmittel nehmen nur bei der oben beschriebenen ersten Betriebsstellung eine sich in die Luftströmung hinein erstreckende wirksame Stellung ein, während sie bei der Außerbetriebsstellung des Windabweiserelementes zusammengefaltet sind und im wesentlichen keinen Einbauraum in Anspruch nehmen. Ein weiterer Vorteil ist, daß die Turbulenzerzeugungsmittel direkt und gezielt die Unterströmung des Windabweiserelementes beeinflussen, die den Hauptbeitrag zu dem Problem des Wummerns liefert. Wie anhand verschiedener Ausführungsbeispiele dargelegt wird, lassen sich außerdem derartige Turbulenzerzeugungsmittel konstruktiv und baulich sehr einfach ausführen, wobei auch die Umstellung zwischen ihrer wirksamen und ihrer unwirksamen Stellung ohne zusätzliche Verstellantriebe und dergleichen allein durch Verstellung des Windabweiserelementes selbst realisiert wird.

Erfindungsgemäß ist ferner vorgesehen, daß die Mittel zur Turbulenzerzeugung durch mehrere quer zur Fahrtrichtung beabstandete, am im Bereich des Vorderrandes der Dachöffnung und/oder am Windabweiserelement befestigte Materialstreifen gebildet sind. Diese Materialstreifen bilden praktisch ein mehr oder weniger enges Gitter für die Unterströmung des Windabweiserelementes, wobei dieses turbulenzerzeugende Gitter beispielsweise durch die Wahl der Breite der Materialstreifen sowie der gegenseitigen Abstände dieser Materialstreifen in einfacher Weise optimiert werden kann. Dadurch, dass die Materialstreifen Zwischenräume aufweisen, können Insekten und andere Fremdkörper durch diese mit hindurchströmen, so dass das Problem der Verschmutzung nicht auftritt.

In einer besonders bevorzugten Ausgestaltung der Erfindung ist vorgesehen, daß die Mittel zur Turbulenzerzeugung durch flexible Bänder gebildet sind, die einerseits im Bereich des vorderen Randes der Dachöffnung und andererseits am Windabweiserelement befestigt sind, und die bei der ersten Betriebsstellung des Windabweiserelementes vollständig gestreckt sind. Eine derartige Ausgestaltung ist konstruktiv und baulich besonders einfach und damit auch preiswert.

Eine andere Ausgestaltung der Erfindung sieht vor, daß die Mittel zur Turbulenzerzeugung durch im Bereich des vorderen Randes der Dachöffnung oder am Windabweiserelement um quer zur Fahrtrichtung liegende Schwenkachsen schwenkbar gelagerte, federnd in Richtung ihrer wirksamen Stellung vorgespannte Klappen gebildet sind. Diese Klappen werden bei der Verstellung des Windabweiserelementes in dessen Außerbetriebsstellung gegen die Kraft der Vorspannfedern in ihre unwirksame Stellung gedrückt und richten sich bei der Verstellung des Windabweiserelementes in dessen erste Betriebsstellung durch die Vorspannfedern auf, so daß sie sich in die Unterströmung des Windabweiserelementes hinein erstrecken.

Eine weitere Ausgestaltung der Erfindung sieht beispielsweise vor, daß die Mittel zur Turbulenzerzeugung durch im Bereich des vorderen Randes der Dachöffnung und am Windabweiserelement um quer zur Fahrtrichtung liegende Schwenkachsen schwenkbar gelagerte, in ihrem mittleren Bereich um wenigstens eine zu den Schwenkachsen parallele Faltachse faltbare Klappen gebildet sind. Derartige Klappen benötigen keine Vorspannfedern, sondern werden durch die Verstellbewegung des Windabweiserelementes zwischen ihrer wirksamen Stellung und ihrer unwirksamen Stellung verstellt.

Eine weitere, konstruktiv sehr einfache und dabei wirksame Lösung sieht vor, daß die Mittel zur Turbulenzerzeugung durch ein zwischen dem vorderen Randbereich der Dachöffnung und dem Windabweiserelement angeordnetes, jeweils dort befestigtes luftdurchlässiges Gewebe oder dergleichen gebildet sind. Ein derartiges Gewebe läßt sich durch die Wahl der Gewebedichte in einfacher Weise funktional optimieren. Durch die DE 196 03 670 C1 ist zwar bereits ein Windabweiser bekannt geworden, bei welchem der Körper des Windabweisers von einer flexiblen dünnwandigen Schicht gebildet wird, die zwischen einer wirksamen, in den Luftstrom über dem Fahrzeugdach ragenden Betriebsstellung und einer unwirksamen, gefalteten Außerbetriebsstellung verstellbar ist; bei dieser Lösung bildet die flexible Schicht jedoch das Windabweiserelement selbst und nicht gesonderte Mittel zur Turbulenzerzeugung. Dieser bekannte Windabweiser kann nur zwischen seiner Außerbetriebsstellung, bei der die Schicht sich nicht in der Luftströmung befindet, und einer Betriebsstellung verstellt werden, bei der die Schicht gestreckt und gespannt ist. Wenn es sich bei der Schicht um eine luftundurchlässige Schicht handelt, dann hat dieser Windabweiser nur die Funktion der einfachen, vorne beschriebenen Windabweiserblätter mit dem Nachteil, daß bei mittleren Fahrgeschwindigkeiten das Problem des Wummerns auftritt. Es ist zwar in dieser Druckschrift auch schon eine Lösung vorgesehen, bei der die Schicht als luftdurchlässiges Gewebe ausgebildet ist, um damit eine turbulente Luftströmung zu erzeugen und ein Wummern zu verhindern. Diese Lösung ermöglicht es jedoch nicht, die Turbulenzerzeugung bei hoher Fahrt abzustellen.

Gemäß der vorliegenden Erfindung ist das Windabweiserelement in eine zweite Betriebsstellung einstellbar, bei der der Zwischenraum für eine Unterströmung geschlossen und die Unterströmung unterbunden ist. Bei dieser Betriebsstellung sind auch die Turbulenzerzeugungsmittel unwirksam, so daß sich diese Betriebsstellung insbesondere für hohe Fahrgeschwindigkeiten eignet.

Gemäß einer weiteren günstigen Ausgestaltung der Erfindung ist vorgesehen, daß die Verstellung des Windabweiserelementes mit der Verstellung des Deckels mechanisch gekoppelt ist derart, daß das Windabweiserelement bei der Öffnungsbewegung des Deckels zunächst über die zweite Betriebsstellung in die erste Betriebsstellung verstellt wird, und in einer letzten kurzen Phase der Öffnungsbewegung des Deckels wieder in seine zweite Betriebsstellung verstellt wird; beim Schließen des Deckels durchläuft das Windabweiserelement diese Stellungen in umgekehrter Reihenfolge. Diese Lösung ermöglicht es, die zweite Betriebsstellung des Windabweiserelementes bei voll geöffnetem Deckel einzustellen, so daß eine Fahrt mit ganz geöffnetem Deckel bei hoher Geschwindigkeit ohne Turbulenz und damit ohne störende Windgeräusche möglich wird. Die letzte Phase der Öffnungsbewegung des Deckels wird vorzugsweise automatisch über einen Fahrgeschwindigkeitssensor, beispielweise über den Tachometer oberhalb einer vorgegebenen Fahrgeschwindigkeit angesteuert, so daß der Fahrer davon entlastet wird, bei hoher Geschwindigkeit die richtige Einstellung für den Deckel und den Windabweiser aufzusuchen.

Mehrere Ausführungsbeispiele der Erfindung sind in der Zeichnung dargestellt und im folgenden näher beschrieben. Es zeigen:
- Fig. 1: perspektivisch eine Draufsicht auf ein Fahrzeugdach mit einer Dachöffnung und einem verschiebbaren Deckel;
- Fig. 2: in einer Draufsicht das Fahrzeugdach der Fig. 1 bei geöffnetem Deckel und sichtbarem Windabweiser;
- Fig. 3: den Windabweiser der Fig. 2 in einer ersten Betriebsstellung, in einer Ansicht von vorne;
- Fig. 4 bis 6: schematisch in einer Seiten-Schnittansicht entsprechend der Schnittlinie I-I der Fig. 1 einen Windabweiser in verschiedenen Stellungen;
- Fig. 7 bis 9: jeweils Ansichten etwa gemäß der Fig. 6, jedoch mit unterschiedlichen Ausgestaltungen der Turbulenzerzeugungsmittel.

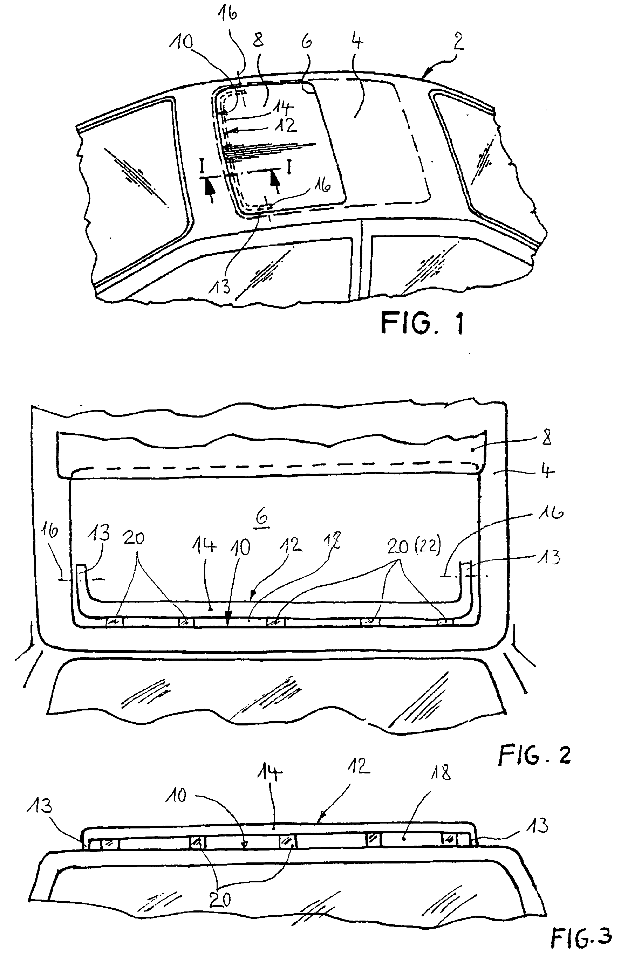

Das in Fig. 1 dargestellte Fahrzeug 2 hat ein festes Fahrzeugdach 4, in welchem eine Dachöffnung 6 ausgebildet ist. Die Dachöffnung 6 kann mittels eines Dekkels 8 wahlweise verschlossen (siehe Fig. 1) oder durch Zurückschieben des Deckels 8 geöffnet werden. Im Bereich der Vorderkante 10 der Dachöffnung 6 ist ein Windabweiser 12 angeordnet, welcher zwischen einer bei geschlossenem Deckel 8 unterhalb desselben liegenden Außerbetriebsstellung und - bei geöffnetem Dach - wenigstens einer über die Dachkontur angehobenen Betriebsstellung verstellbar ist, wie allgemein bekannt ist. Der Windabweiser ist im dargestellten Ausführungsbeispiel als etwa U-förmiger Bügel ausgebildet, d.h. er umfaßt ein Windabweiserelement 14 sowie zwei an dessen Enden ausgebildete Schwenkarme 13, über die das Windabweiserelement 14 um eine quer zur Fahrzeuglängsrichtung liegende Schwenkachse 16 verschwenkbar ist.

Fig. 2 zeigt in einer vergrößerten Darstellung eine Ansicht des Fahrzeuges der Fig. 1 von oben bei im wesentlichen vollständig geöffnetem Deckel 8, wobei die Dachöffnung 6 und der Windabweiser 12 freigelegt sind. Bei dieser Stellung des Deckels 8 ist das Windabweiserelement 14 im allgemeinen in eine seiner Betriebsstellungen eingestellt, wie noch dargelegt wird.

Fig. 3 zeigt den oberen Bereich des Fahrzeuges der Fig. 1 und 2, wobei das Windabweiserelement 14 in eine oberhalb der Dachkontur angehobene Betriebsstellung eingestellt ist. Fig. 3 zeigt insbesondere die erste Betriebsstellung, bei der das Windabweiserelement 14 so weit angehoben ist, daß zwischen dem Windabweiserelement 14 und dem vorderen Rand 10 der Dachöffnung ein Zwischenraum 18 für eine Unterströmung des Windabweiserelementes 14 gebildet ist. Wie anhand der weiteren Figuren dargelegt wird, wird diese Unterströmung durch das Windabweiserelement 14 des Windabweisers 12 aktiv nach unten in den Fahrgastraum gelenkt, um diesen insbesondere bei niedrigen Fahrgeschwindigkeiten zu belüften.

Um in der Unterströmung des Windabweiserelementes 14 eine Turbulenz zu erzeugen, sind zwischen dem Windabweiserelement 14 und dem vorderen Randbereich der Dachöffnung Mittel 20 zur Turbulenzerzeugung vorgesehen, die sich bei der dargestellten ersten Betriebsstellung des Windabweiserelementes 14 in die Unterströmung hinein erstrecken, und die bei der Verstellung des Windabweiserelementes in die Außerbetriebsstellung unter demselben zusammenfaltbar sind.

Die Turbulenzerzeugungsmittel sind durch mehrere quer zur Fahrtrichtung zueinander beabstandete Materialstreifen gebildet, die im Bereich des vorderen Randes der Dachöffnung und/oder am Windabweiserelement 14 befestigt sind oder sich an diesen zumindest in stetiger, bevorzugt federnder Anlage befinden. Diese Materialstreifen können unterschiedliche Ausgestaltungen haben, wie im folgenden dargelegt wird.

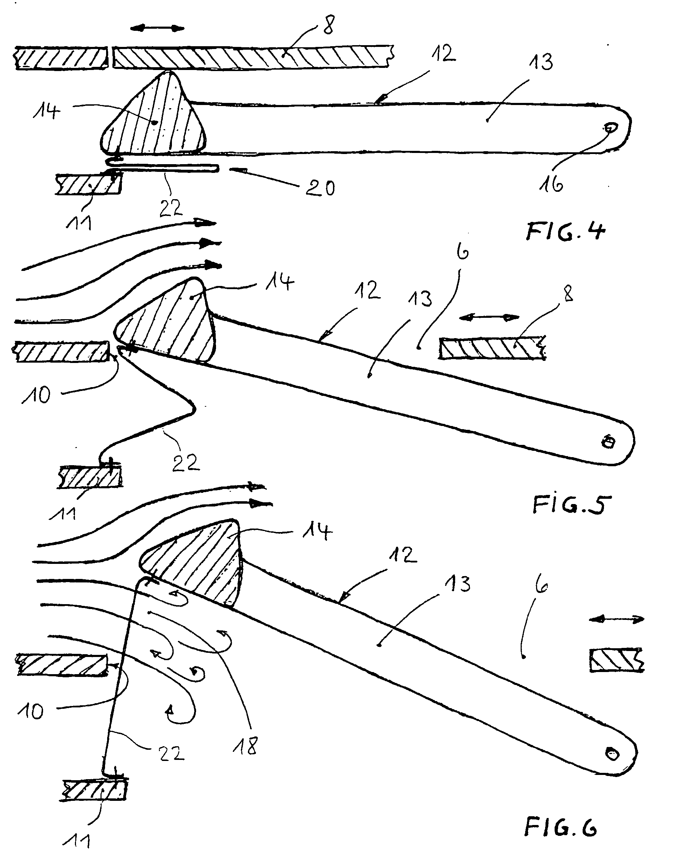

Fig. 4 zeigt stark schematisiert eine Schnittansicht etwa entsprechend der Schnittlinie I-I in Fig. 1. Der Deckel 8 ist geschlossen. Das Windabweiserelement 14 nimmt seine untere, vollständig in die Dachkontur zurückgezogene Außerbetriebsstellung ein und ist durch den geschlossenen Deckel 8 vollständig abgedeckt. Die Mittel 20 zur Turbulenzerzeugung sind im Beispiel der Fig. 4 durch flexible Bänder 22 gebildet, die einerseits am Windabweiserelement 14 und andererseits an der den vorderen Rand der Dachöffnung bildenden Holmstruktur 11 befestigt sind, und die sich unterhalb des Windabweiserkörpers 14 mit geringstem Raumbedarf zusammenfalten, wie Fig. 4 zeigt.

Fig. 5 zeigt die Anordnung gemäß der Fig. 4, wobei jedoch der Deckel 8 zu einem Teil geöffnet und das Windabweiserelement 14 in eine Betriebsstellung (zweite Betriebsstellung) eingestellt ist, bei der kein Zwischenraum für eine Unterströmung des Windabweiserelementes 14 besteht. Bei dieser zweiten Betriebsstellung wird das Windabweiserelement 14 nur an seiner Oberseite umströmt. Die flexiblen Bänder 22 sind halb entfaltet, d.h. also schlaff. Das ist jedoch unschädlich, da sie nicht von einem Luftstrom getroffen werden. Die in Fig. 5 dargestellte zweite Betriebsstellung wird einerseits beim Öffnen des Daches und der Verstellung des Windabweiserelementes in die in Fig. 6 gezeigte erste Betriebsstellung durchlaufen, andererseits wird sie bei einer hohen Fahrgeschwindigkeit des Fahrzeuges eingestellt, wenn eine Unterströmung des Windabweiserelementes 14 und eine dadurch verursachte Ablenkung des Luftstromes ins Fahrzeuginnere nicht erwünscht ist, wie noch dargelegt wird.

Fig. 6 zeigt die erste Betriebsstellung des Windabweiserelementes 14, bei der zwischen dem Windabweiserelement 14 und dem vorderen Rand 10 der Dachöffnung ein Zwischenraum 18 für eine Unterströmung des Windabweiserelementes 14 verbleibt. Bei dieser ersten Betriebsstellung sind die flexiblen Bänder 22 vollständig gestreckt und gespannt, so daß sie durch die Unterströmung des Windabweiserelementes 14 nicht flattern. Wie in Fig. 6 angedeutet ist, ist der durch den Zwischenraum 18 geführte Luftstrom hinter den Bändern 22 verwirbelt, womit ein Wummern im Fahrzeuginneren vermieden wird. Die in Fig. 6 dargestellte erste Betriebsstellung ist die Betriebsstellung für mittlere Fahrgeschwindigkeiten.

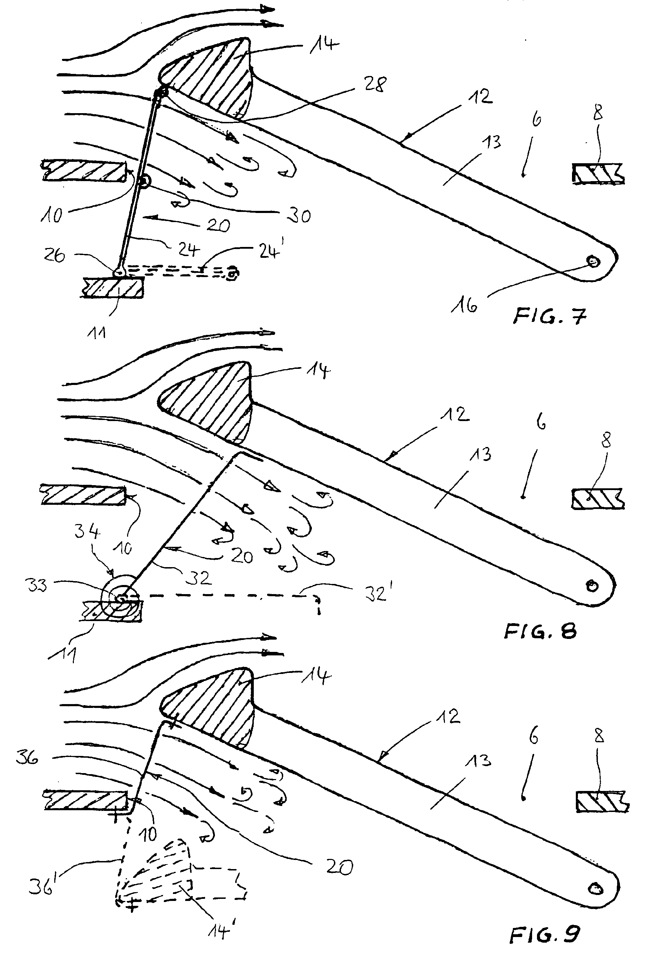

Fig. 7 zeigt eine Darstellung etwa gemäß der Fig. 6, wobei die Mittel 20 zur Turbulenzerzeugung in diesem Ausführungsbeispiel durch faltbare Klappen 24 gebildet sind, die einerseits am vorderen Rand der Dachöffnung 10 bzw. an der zugeordneten Holmstruktur und andererseits am Windabweiserelement 14 um quer zur Fahrtrichtung liegende Schwenkachsen 26 bzw. 28 schwenkbar gelagert und im mittleren Bereich um eine zu den Schwenkachsen 26, 28 parallele Faltachse 30 faltbar ist. Der bei der Außerbetriebsstellung des Windabweiserelementes 14 von der Faltklappe 24 angenommene, zusammengefaltete Zustand ist gestrichelt dargestellt und mit 24' bezeichnet.

Fig. 8 zeigt eine weitere Ausgestaltung, bei der die Mittel 20 zur Turbulenzerzeugung durch um Schwenkachsen 33 schwenkbar gelagerte Klappen 32 gebildet sind, die durch Federn 34 in ihre in Fig. 8 dargestellte aufgerichtete Stellung vorgespannt sind, in der ihr oberes Ende an der Unterseite des Windabweiserelements 14 federnd vorgespannt anliegt. Wenn das Windabweiserelement 14 in seine Außerbetriebsstellung eingestellt wird, werden die Klappen 32 gegen die Kraft der Federn 34 in die gestrichelt dargestellte, mit 32' bezeichnete Stellung zusammengefaltet.

Fig. 9 zeigt ein Ausführungsbeispiel, bei welchem die Mittel 20 zur Turbulenzerzeugung durch luftdurchlässiges Gewebe 36 gebildet sind, das einerseits am Windabweiserelement 14, andererseits direkt am vorderen Rand 10 der Dachöffnung befestigt ist und sich vorzugsweise über die gesamte Breite des Windabweiserelementes 14 erstreckt. Wenn das Windabweiserelement 14 in seine in Fig. 9 gestrichelt dargestellte Stellung 14' verstellt wird, nimmt das flexible Gewebe 36 die ebenfalls gestrichelt dargestellte, mit 36' bezeichnete unwirksame Lage ein.

### Bezugszeichenliste

- 2: Fahrzeug
- 4: Fahrzeugdach
- 6: Dachöffnung
- 8: Deckel
- 10: vorderer Rand von 6
- 11: Holmstruktur
- 12: Windabweiser
- 13: Schwenkarme
- 14: Windabweiserelement (in Betriebsstellung)
- 14': Windabweiserelement (in Außerbetriebsstellung)
- 16: Schwenkachse
- 18: Zwischenraum
- 20: Turbulenzerzeugungsmittel
- 22: flexible Bänder
- 24: Faltklappen (ausgefaltet)
- 24': Faltklappen (in zusammengefaltetem Zustand)
- 26: Schwenkachse
- 28: Schwenkachse
- 30: Faltachse
- 32: schwenkbare Klappen (ausgefaltet)
- 32': schwenkbare Klappen (in zusammengefaltetem Zustand)
- 33: Schwenkachsen
- 34: Federn
- 36: luftdurchlässiges Gewebe (in Betriebsstellung)
- 36': luftdurchlässiges Gewebe (in Außerbetriebsstellung)

## Patentansprüche

1. Windabweiser für ein Fahrzeugdach mit einer mittels eines verstellbaren Deckels (8) verschließbaren Dachöffnung (6), umfassend ein entlang des vorderen Randes der Dachöffnung (6) angeordnetes Windabweiserelement (14), welches zwischen einer in die Dachkontur zurückgezogenen Außerbetriebsstellung und wenigstens einer ersten Betriebsstellung verstellbar ist, bei der zwischen dem Windabweiserelement (14) und dem vorderen Rand der Dachöffnung (6) ein Zwischenraum (18) für eine Unterströmung des Windabweiserelementes (14) besteht, und wobei zwischen dem Windabweiserelement (14) und dem vorderen Rand (10) der Dachöffnung (6) Mittel (20) zur Turbulenzerzeugung in der Unterströmung des Windabweiserelementes (14) vorgesehen sind, die sich bei der ersten Betriebsstellung des Windabweiserelementes (14) in die Unterströmung hinein erstrecken, und die bei der Verstellung des Windabweiserelementes (14) in die Außerbetriebsstellung innerhalb der Dachkontur ablegbar sind, wobei die Mittel (20) zur Turbulenzerzeugung mit ihrem oberen Ende am Windabweiserelement (14) und mit ihrem unteren Ende im Bereich des vorderen Randes (10) der Dachöffnung (6) an einem am festen Fahrzeugdach angeordneten Teil (11) befestigt sind oder sich dort mit zumindest einem Ende in stetiger Anlage befinden, **dadurch gekennzeichnet, daß** die Mittel (20) zur Turbulenzerzeugung durch mehrere quer zur Fahrtrichtung beabstandete Materialstreifen gebildet sind.

2. Windabweiser nach Anspruch 1, **dadurch gekennzeichnet, daß** die Mittel (20) zur Turbulenzerzeugung durch flexible Bänder (22) gebildet sind, die bei der ersten Betriebsstellung des Windabweiserelementes (14) gestreckt und die bei der Außerbetriebsstellung des Windabweiserelementes (14) in einer Ablageposition unterhalb der Außenkontur des festen Fahrzeugdachs (4) zusammengefaltet sind.

3. Windabweiser nach Anspruch 1, **dadurch gekennzeichnet, daß** die Mittel (20) zur Turbulenzerzeugung durch im Bereich des vorderen Randes (10) der Dachöffnung (6) oder am Windabweiserelement (14) um quer zur Fahrtrichtung liegende Schwenkachsen (33) schwenkbar gelagerte, federnd vorgespannte Klappen (32) gebildet sind.

4. Windabweiser nach Anspruch 1, **dadurch gekennzeichnet, daß** die Mittel (20) zur Turbulenzerzeugung durch am vorderen Rand (10) der Dachöffnung (6) und am Windabweiserelement (14) um quer zur Fahrtrichtung liegende Schwenkachsen (26, 28) schwenkbar gelagerte, im mittleren Bereich um wenigstens eine zu den Schwenkachsen (26, 28) parallele Faltachse (30) faltbare Klappen (24) gebildet sind.

5. Windabweiser nach weingstens einem der vorhergehenden Ansprüche, **dadurch gekennzeichnet, daß** die Mittel (20) zur Turbulenzerzeugung durch ein zwischen dem vorderen Rand (10) der Dachöffnung (6) und dem Windabweiserelement (14) angeordnetes, an diesen befestigtes luftdurchlässiges Gewebe oder dergleichen gebildet sind.

6. Windabweiser nach einem der Ansprüche 1 bis 5 , **dadurch gekennzeichnet, daß** das Windabweiserelement (14) in eine zweite Betriebsstellung einstellbar ist, bei der der Zwischenraum für eine Unterströmung des Wind-abweiserelementes (14) geschlossen und die Unterströmung unterbunden ist.

7. Windabweiser nach Anspruch 6, **dadurch gekennzeichnet, daß** die Verstellung des Windabweisers (12) mit der Verstellung des Deckels (8) mechanisch gekoppelt ist derart, daß der Windabweiser (12) bei der Öffnungsbewegung des Deckels (8) zunächst über die zweite Betriebsstellung in die erste Betriebsstellung verstellt wird, und in einer letzten kurzen Phase der Öffnungsbewegung des Deckels (8) wieder in seine zweite Betriebsstellung verstellt wird bzw. umgekehrt.

8. Windabweiser nach Anspruch 7, **dadurch gekennzeichnet, daß** die letzte Phase der Öffnungsbewegung des Deckels (8) automatisch über einen Fahrgeschwindigkeitssensor oberhalb einer vorgegebenen Fahrgeschwindigkeit angesteuert wird.

## Claims

1. Wind deflector for a vehicle roof having a roof opening (6) that can be closed by means of a displaceable panel (8), comprising a wind deflector element (14) which is arranged along the front edge of the roof opening (6) and which can be displaced between an inoperative position pulled back into the roof contour and at least a first operating position, in which there is an interspace (18) for a flow under the wind deflector element (14) between the wind deflector element (14) and the front edge of the roof opening (6), and means (20) for generating turbulence in the flow underneath the wind deflector element (14) being provided between the wind deflector element (14) and the front edge (10) of the roof opening (6), in the first operating position of the wind deflector element (14), the said means extending into the underflow and, during the displacement of the wind deflector element (14) into the inoperative position, it being possible for them to be stored within the roof contour, the means (20) for generating turbulence being fixed by their upper end to the wind deflector element (14) and by their lower end in the region of the front edge (10) of the roof opening (6) to a part (11) arranged on the fixed vehicle roof or being in continuous contact with at least one end there, **characterized in that** the means (20) for generating turbulence are formed by a plurality of material strips spaced apart transversely with respect to the direction of travel.

2. Wind deflector according to Claim 1, **characterized in that** the means (20) for generating turbulence are formed by flexible bands (22) which are stretched in the first operating position of the wind deflector element (14), and which, in the inoperative position of the wind deflector element (14), are folded together into a storage position underneath the outer contour of the fixed vehicle roof (4).

3. Wind deflector according to Claim 1, **characterized in that** the means (20) for generating turbulence are formed by spring-prestressed flaps (32) which are mounted in the region of the front edge (10) of the roof opening (6) or on the wind deflector element (14) such that they can be pivoted about pivot axes (33) located transversely with respect to the direction of travel.

4. Wind deflector according to Claim 1, **characterized in that** the means (20) for generating turbulence are formed by flaps (24) which are mounted on the front edge (10) of the roof opening (6) or on the wind deflector element (14) such that they can be pivoted about pivot axes (26, 28) located transversely with respect to the direction of travel and, in the central region, can be folded about at least one folding axis (30) parallel to the pivot axes (26, 28).

5. Wind deflector according to at least one of the preceding claims, **characterized in that** the means (20) for generating turbulence are formed by an air-permeable fabric or the like arranged between the front edge (10) of the roof opening (6) and the wind deflector element (14) and fixed to the latter.

6. Wind deflector according to one of Claims 1 to 5, **characterized in that** the wind deflector element (14) can be set into a second operating position, in which the interspace for flow under the wind deflector element (14) is closed and the underflow is prevented.

7. Wind deflector according to Claim 6, **characterized in that** the displacement of the wind deflector (12) is coupled mechanically to the displacement of the panel (8) in such a way that, during the opening movement of the panel (8), the wind deflector (12) is first deflected over the second operating position into the first operating position and, in a last, short phase of the opening movement of the panel (8), is displaced into its second operating position again, or vice versa.

8. Wind deflector according to Claim 7, **characterized in that**, above a predefined speed of travel, the last phase of the opening movement of the panel (8) is driven automatically by a speed of travel sensor.

## Revendications

1. Déflecteur pour un toit de véhicule doté d'une ouverture de toit (6) pouvant être fermée au moyen d'un panneau réglable (8), comprenant un élément déflecteur (14) disposé le long du bord avant de l'ouverture de toit (6), élément qui peut être déplacé entre une position hors service rétractée dans le contour du toit et au moins une première position de service dans laquelle il existc entre l'élément déflecteur (14) et le bord avant de l'ouverture de toit (6) un espace intermédiaire (18) pour le passage d'un flux sous l'élément déflecteur (14), et sachant qu'il est prévu entre l'élément déflecteur (14) et le bord avant (10) de l'ouverture de toit (6) des moyens (20) pour produire des turbulences dans le flux passant sous l'élément déflecteur (14), moyens qui s'étendent à l'intérieur dudit flux dans la première position de service de l'élément déflecteur (14) et qui, lors du déplacement de l'élément déflecteur (14) dans la position hors service, peuvent être rangés à l'intérieur du contour de toit, sachant que les moyens (20) pour produire des turbulences sont fixés par leur extrémité supérieure sur l'élément déflecteur (14) et par leur extrémité inférieure, dans la région du bord avant (10) de l'ouverture de toit (6), sur un élément (11) disposé sur le toit fixe du véhicule, ou s'y trouvent en application constante par au moins une extrémité, **caractérisé en ce que** les moyens (20) pour produire des turbulences sont formés par plusieurs bandes de matériau distantes transversalement à la direction de marche.

2. Déflecteur selon la revendication 1, **caractérisé en ce que** les moyens (20) pour produire des turbulences sont formés par des bandes flexibles (22) qui sont déployées dans la première position de service de l'élément déflecteur (14) et qui, dans la position hors service de l'élément déflecteur (14), sont repliées dans une position de rangement en dessous du contour extérieur du toit fixe (4) du véhicule.

3. Déflecteur selon la revendication 1, **caractérisé en ce que** les moyens (20) pour produire des turbulences sont formés par des volets (32) élastiquement précontraints qui, dans la région du bord avant (10) de l'ouverture de toit (6) ou sur l'élément déflecteur (14), sont montés à pivotement autour d'axes de pivotement (33) placés transversalement à la direction de marche.

4. Déflecteur selon la revendication 1, **caractérisé en ce que** les moyens (20) pour produire des turbulences sont formés par des volets (24) qui sont montés à pivotement, sur le bord avant (10) de l'ouverture de toit (6) et sur l'élément déflecteur (14), autour d'axes de pivotement (26, 28) placés transversalement à la direction de marche, et qui peuvent être pliés, dans la région centrale, autour d'au moins un axe de pliage (30) parallèle aux axes de pivotement (26, 28).

5. Déflecteur selon au moins une des revendications précédentes, **caractérisé en ce que** les moyens (20) pour produire des turbulences sont formés par un tissu ou analogue perméable à l'air, disposé entre le bord avant (10) de l'ouverture de toit (6) et l'élément déflecteur (14) et fixé sur ceux-ci.

6. Déflecteur selon l'une des revendications 1 à 5, **caractérisé en ce que** l'élément déflecteur (14) peut être réglé dans une deuxième position de service dans laquelle l'espace intermédiaire pour le passage d'un flux sous l'élément déflecteur (14) est fermé et le passage dudit flux est empêché.

7. Déflecteur selon la revendication 6, **caractérisé en ce que** le déplacement du déflecteur (12) est couplé mécaniquement au déplacement du panneau (8) de telle sorte que le déflecteur (12), lors du mouvement d'ouverture du panneau (8), est d'abord déplacé au-delà de la deuxième position de service dans la première position de service puis est ramené dans sa deuxième position de service dans une dernière courte phase du mouvement d'ouverture du panneau (8), ou vice versa.

8. Déflecteur selon la revendication 7, **caractérisé en ce que** la dernière phase du mouvement d'ouverture du panneau (8) est, au moyen d'un capteur de vitesse de marche, opérée automatiquement au-dessus d'une vitesse de marche prédéfinie.
